# EUROPEAN PATENT APPLICATION

(11) **EP 4 836 401 A1**
(43) Date of publication of application: **04.11.2026**
(21) Application number: 25173749.0
(22) Date of filing: 30.04.2025
(51) Int. Cl.: H04N 19/119, H04N 19/167, H04N 19/20, H04N 19/597, H04N 19/70

(54) **PATCH-BASED VIDEO CODING SYSTEM**

(71) Applicant: Koninklijke Philips N.V., 5656 AE Eindhoven (NL)
(72) Inventor: KROON, Bart, 5656 AG Eindhoven (NL); VAREKAMP, Christiaan, 5656 AG Eindhoven (NL); GARCIA MORCHON, Oscar, 5656 AG Eindhoven (NL)
(74) Representative: Philips Intellectual Property & Standards

(57) **Abstract**

An apparatus for encoding video data, comprising: a patch segmentation module configured to segment an input video image into a plurality of patches, each patch being defined by patch metadata; a patch reference grid generator configured to assign each patch a patch reference grid, wherein the patch reference grid determines a relation relative to an origin within a coordinate system; an encoder module configured to encode the plurality of patches into a coded layer in which each patch is coded using the patch metadata and the patch reference grid.

## Description

### FIELD OF THE INVENTION

The invention relates to an apparatus and method for encoding and decoding patch based image/video signal, such as an immersive video signal or an object based video signal.

### BACKGROUND OF THE INVENTION

The field of digital video coding has long been rooted in techniques that segment image data into conventional, rectangular frames for processing and transmission. Most existing systems decompose video into fixed-size blocks or coding units, a method that has served well for traditional video applications. However, as interactive media and immersive experiences become increasingly prevalent, there is a growing need for methods that can efficiently handle a range of non-standard image data representations. Many current video coding frameworks focus on uniform, frame-based processing, which may not optimally address the requirements of dynamic, object-based, or scene-adaptive content. This evolving landscape of media applications calls for flexible coding strategies that can accommodate multiple, independently processed segments within a single access unit.

In modern applications such as augmented reality, virtual reality, and object-based video production, there is an increasing demand for video processing methods that cater to diverse regions of an image without imposing rigid frame constraints. These applications require that each segment or region of interest be managed in a way that can independently support the dynamic qualities of the content. Efficient rendering, adaptability to various viewing environments, and low-latency response are important factors influencing the development of new approaches. Optimizing the balance between coding flexibility and resource consumption is necessary to mitigate processing overhead and deliver high-quality experiences on platforms with limited computational capabilities.

Existing video coding methodologies are generally designed with rectangular, block-based structures in mind, where the boundaries of coding units are fixed and predetermined. When the image content does not conform to these rigid partitions, difficulties arise in achieving both high coding efficiency and accurate representation of the desired visual scene. In many cases, ensuring temporal consistency across sequential frames necessitates extensive buffering or complex alignment techniques, which in turn increase computational demands and system latency. These methods, while effective under standard conditions, often struggle to accommodate more diverse, segmented representations of image data, leading to potential inefficiencies and visual irregularities that adversely impact overall performance.

A particularly challenging issue emerges when encoding multiple non-rectangular regions that do not align exactly with conventional coding unit boundaries. When the demarcation of these regions intersects standard block structures, visible artifacts and inconsistencies may occur-especially at moderate bitrate levels-compromising the quality of the final rendered image. Additionally, conventional systems may inadvertently expend processing resources by performing extraneous motion estimation across independently moving regions, further exacerbating the problem of crosstalk and prediction errors. Addressing these challenges requires developing coding approaches that preserve temporal consistency and reduce the need for excessive buffering or increased bitrate, thereby ensuring that dynamically partitioned image regions can be encoded and decoded efficiently and reliably for immersive video applications.

For instance, an ISO/IEC 23090-5 Visual volumetric video-based coding (V3C) encoder needs to do effort (algorithms, computations) to efficiently pack patches into the rectangular frame. Estimating the required frame size and aspect ratio for an optimal paking is often difficult. Moreover, the optimal required frame size and aspect ratio could change over time e.g. when 3D spatial distribution of scene objects changes. The packing algorithm also needs to take into account the Coding Transfer Unit (CTU)/ Coding Unit (CU) boundaries for optimal performance. Having a patch boundary run through a CTU is likely to cause inter-patch crosstalk at low/medium bitrates and this may cause visible patch boundaries when rendering a viewport. We have observed this in MPEG experiments. To make the packing temporally consistent, the encoder needs to buffer frames, in similar manner as Test Model for Immersive Video (TMIV) and this creates latency and increases memory requirements, or the encoder cannot have a dense packing, which causes an increase of the video frame size, which increases the required video decoder level, otherwise, if the packing is not temporally consistent, this requires a a significant bitrate increase to avoid visible patch boundaries when switching the content. The video encoder will try to perform motion estimation across patches and this is not only a waste of resources, but can also result in crosstalk between patches by false motion predictions, which will cause visible patch boundaries at low/medium bitrates. Another reason why patch boundaries can become visible is that the video encoder is not aware of the actual image data beyond the patch boundaries. In the atlas typically there is image data of another unrelated patch and the video encoder may or may not detect an image edge.

Hence, an improved approach would be advantageous.

### SUMMARY OF THE INVENTION

Accordingly, the Invention seeks to preferably mitigate, alleviate or eliminate one or more of the above mentioned disadvantages singly or in any combination.

According to a first aspect of the invention, there is provided an apparatus for encoding video data, comprising a patch segmentation module configured to segment an input video/image into a plurality of patches, each patch being defined by patch metadata;
a patch reference grid generator configured to assign to each patch a patch reference grid, wherein the patch reference grid determines a relation relative to an origin within a coordinate system; and an encoder module configured to encode the plurality of patches into a coded layer in which each patch is coded using the patch metadata and the patch reference grid.

As an example, the coordinate system may be a 2-D Cartesian coordinate system that may contain two orthogonal directions such as pixel row index and pixel column index. The origin of the coordinate system may be derived from the patch metadata or can be defined in relation to the first block such as a Coding Transfer Unit (CTU)/macro block. For instance, the first block may have block coordinate (0, 0). As another example, the coordinate axes may have unit pixel. A first block may have a specific pixel coordinate (u,v) for its position, e.g. indicated by its upper left corner. The current invention may use unit pixel, or alternatively unit sub-pixel such as ½ pixel units or ¼ pixel units, to be able to have a separate/independent multi-scale block partition for patches from different views or different moments in time. Advantageously, it enables better approximating the boundary geometry of a patch.

Note that the term patch reference grid can also be interpreted by equivalent term such as patch block coordinate system or virtual reference grid.

The invention introduces a patch-based framework that eliminates the need for packing patches into conventional rectangular frames or video atlases, as required by existing standards like V3C. Unlike traditional methods that rely on fixed frame structures, this approach enables the independent encoding and decoding of arbitrarily shaped patches, each defined by its own metadata and patch reference grid. The introduced patch-based framework may mitigate issues such as crosstalk caused by false motion estimation across patch boundaries and reduces the computational complexity associated with temporal consistency and dense packing in video atlases. Furthermore, the described technology introduces a flexible coordinate system for patches, allowing for efficient motion estimation and inter-patch prediction without the constraints of a fixed frame. In many embodiments, by supporting non-rectangular patches, hierarchical metadata structures, and multi-modality codecs, the described invention provides a versatile and efficient solution for immersive and object-based video applications, offering significant improvements over existing video coding techniques.

Since each patch is treated as an independent coding unit with its own metadata and patch reference grid, it enables efficient encoding and decoding without the constraints of a fixed frame structure. This method reduces the complexity of the encoding process, as it avoids the need for algorithms to optimize patch packing or account for Coding Transfer Unit (CTU)/Coding Unit (CU) boundaries. By leveraging a patch reference grid, the described framework facilitates accurate motion estimation and inter-patch prediction while mitigating crosstalk and false motion predictions. Additionally, the use of patch-specific metadata, such as bounding boxes, and/or binary masks and offset, allows for precise definition of patch shapes and positions, further enhancing coding efficiency and reducing signaling overhead.

The described invention also introduces mechanisms for adaptive patch frequency and granularity, which enables dynamic adjustments based on scene complexity, object motion, or decoder requirements. This adaptability promotes efficient resource allocation and high-quality video output across diverse applications. Moreover, the described invention discloses advanced features such as multilayer coding, object-based video representation, and multi-modality integration, making it versatile for emerging use cases in immersive media, healthcare imaging, and beyond. By rethinking the structural framework of video coding to accommodate non-rectangular patches, the described approach provides a robust and scalable solution that addresses the limitations associated with conventional frame-based methods.

According to an optional feature of the invention, the patch metadata comprises a patch identifier, and a binary mask and offset that specifies an arbitrary shape at a coded patch block granularity.

Note that the binary mask and offset may particularly be useful for the following examples: a) an object is tracked over time, and the object moves along the field of view of a camera; b) the position of a patch has application-specific information, for instance because it is the position within a project plane for which view parameters have been provided.

In some embodiments, the binary mask and offset may further specify the position and orientation of that shape within the patch reference grid.

In some embodiments, the patch reference grid may be an unbounded binary mask with signed integers for (row, column) and the patch is defined by a limited amount of cells in the mask that are flagged as true (1).

Note that, when the current invention is implemented into the existed standard such as HEVC/VVC, the term coded patch block is equivalent to CTU in HEVC/VVC.

According to an optional feature of the invention, the binary mask is run-length encoded.

According to an optional feature of the invention, the size of the binary mask and offset is signaled.

According to an optional feature of the invention, a patch window is provided with pixel (or sub-block) accuracy.

According to an optional feature of the invention, the apparatus further comprises a motion estimation module configured to perform motion estimation between a current patch and one or more reference patches based on the coordinate system and the patch reference grid. This may provide a particularly advantageous approach in many embodiments. For instance, it facilitates inter-patch prediction while it mitigates cross-talk caused by false motion estimation across patch boundaries. Also, there has to be a way to signal which patches are the reference patches for a current patch. In terms of signalling, it may be possible to provide an offset or even an affine transformation to align the patches in the virtual reference grid. If nothing is done, then an offset of (0, 0) is implied. This can be considered to be a trivial offset or/the absence of an offset.

According to another aspect of the invention, there is provided an apparatus for decoding video data, comprising: a receiver configured to receive a coded layer comprising a plurality of encoded patches, each encoded patch being associated with patch metadata and a patch reference grid within a coordinate system; and a patch decoding module configured to decode each encoded patch based on the patch metadata and the patch reference grid.

According to an optional feature of the invention, the patch metadata includes information defining the shape of the patch, the position of the patch within the patch reference grid, and wherein the information are defined by a binary mask and offset at a predetermined coded patch block granularity.

According to an optional feature of the invention, the patch decoding module is configured to transform a bitstream according to one standard/profile and transmit the transformed bitstream to a 2D video decoder that implements that standard/profile.

According to an optional feature of the invention, at least one patch comprises a metadata structure for a group of patches, where the group shares common characteristics such as motion vectors, color profiles, or depth information.

According to an optional feature of the invention, at least one patch represents a subject or object, and wherein the at least one patch comprises sub-patches representing different modalities, for instance: video and/or audio; multispectral images; and/or two or more healthcare imaging modalities such as ultrasound imaging, Magnetic Resonance Imaging, Computed Tomography, X-ray.

According to an optional feature of the invention, the patch reference grid generator is further configured to assign a pixel coordinate system to each patch. The pixel coordinate system is configured to assign a pixel coordinate to each pixel within the patch.

The pixel coordinate system may follow from the block coordinate system. As an example, the top-left pixel of a block with coordinate (0, 0) can have pixel coordinate (0, 0). Accordingly, for a block size k, the top-left pixel of a block with coordinate (i, j) would be (ki, kj).

According to another aspect of the invention, there is provided a method for encoding video data, comprising: segmenting an input video image into a plurality of patches, each patch being defined by patch metadata; assigning each patch a patch reference grid within a coordinate system, wherein the patch reference grid indicates a spatial reference for the patch independent of a fixed frame structure; encoding each of the plurality of patches into a coded layer using the patch metadata and the patch reference grid; and generating a bitstream comprising the coded layer, wherein the bitstream includes the encoded patches and the associated patch metadata and the patch reference grid.

According to another aspect of the invention, there is provided a method for decoding video data, comprising: receiving a coded layer comprising a plurality of encoded patches, each encoded patch being associated with patch metadata and a patch reference grid defined within a coordinate system, and decoding each encoded patch based on the patch metadata and the patch reference grid to generate a corresponding decoded patch.

According to another aspect of the invention, there is provided a computer program product comprising computer program code means adapted to perform all the steps of the above mentioned methods when said program is run on a computer.

According to an optional feature of the invention, the patch metadata includes shape information that specifies an arbitrary shape of the patch at a coding tree unit (CTU) level, the shape information being decodable to provide a list of CTU positions within an access unit, enabling the patch to be decoded in a manner similar to a slice. This may provide a particularly advantageous approach in many embodiments. Having shape metadata that can be decoded to give a list of CTU positions, enables that a patch can be decoded in a similar way to a slice in standard such as HEVC and VVC, wherein the slice in such standard does have fixed shape.

According to an optional feature of the invention, the patch metadata includes a patch identifier (ID) configured to locate related patches in reference frames, enabling the use of patch-relative coordinates for dependent patches and eliminating the need for frame-level coordinates, wherein the patch ID is signaled in the slice segment header of the coded bitstream. This may provide a particularly advantageous approach in many embodiments. It enables the use of patch-relative coordinates for dependent patches, and it removes the need to have frame-level coordinates. For HEVC/VVC, the patch ID can be signaled in the slice segment header RBSP.

According to an optional feature of the invention, the patch is encoded without a defined location within a subpicture, tile, picture, or frame, such that the patch does not require a specific offset within a video frame or placement within a video atlas, provided that all patches fit within the coded layer. This may provide a particularly advantageous approach in many embodiments. The inventors are aware that, in a conventional atlas-based video solution, the position of a patch in a video atlas has no specific meaning. The only requirement is that all patches fit in the atlas. Contrary to the conventional solution, a codec according to the current invention does not require the placement of patches in a video atlas. Hence, a patch does not require an offset within a video frame. Nevertheless, it is noted that a patch may require an offset into a volume or a projection plane for some applications. For instance, for Visual Volumetric Video-based Coding (V3C) standard related application, the patch data unit gives a "2D" bounding box which is the position of the patch in the video frame/atlas, and a "3D" bounding box which is the position of the patch within a 3-D volume. For Video-based Point Cloud Compression (V-PCC) standard related application, it is directly the volume that includes the point cloud. For MPEG Immersive Video (MIV) related application, it is a UVD space whereby UV is the projection plane and D is normalised disparity; thus also providing a mapping to scene space, with the help of camera parameters.

According to an optional feature of the invention, the start address of a patch is not signaled, as the patch does not require an offset within a video frame, thereby reducing signaling overhead in the bitstream.

According to an optional feature of the invention, the start address of an independent slice segment indicates a position within a virtual frame that contains the patch, the virtual frame having an allowed maximum number of samples that exceeds the allowed maximum number of coded samples, enabling a decoder to decode all patches into a single frame buffer without requiring the encoder to determine an efficient patch packing. This gives the option for a decoder to decode all patches into a single frame buffer, without requiring an encoder to determine an efficient patch packing. For instance, there may be a tier and level for which the equivalent of 8K x 4K video is decodable, but the virtual frame can be 16K x 8K such that there is enough space to account for arbitrary patch shapes. It should not be a requirement for a decoder to decode the virtual frame. The conformance point can be on the decoded patch data.

According to an optional feature of the invention, multiple non-rectangular patches are coded within a virtual frame without overlap and without requiring the patches to partition the virtual frame, enabling a decoder to decode all patches into a single frame buffer while allowing sufficient space to accommodate arbitrary patch shapes. This gives the option for a decoder to decode all patches into a single frame buffer, without requiring an encoder to determine an efficient patch packing. For instance, there may be a tier and level for which the equivalent of 8K x 4K video is decodable, but the virtual frame can be 16K x 8K such that there is enough space to account for arbitrary patch shapes. It should not be a requirement for a decoder to decode the virtual frame. The conformance point can be on the decoded patch data.

According to an optional feature of the invention, a level limit is imposed on the maximum number of coding tree units (CTUs) in an access unit, providing a measure of size and rate for resource calculation without relying on a fixed picture concept. For current conventional video codecs, the maximum picture size and maximum luma sample rate is based on the number of rows and columns of a picture. According to the invention, the codec does not have a picture concept, or it only has a loose virtual picture that can be larger than needed. However, for a decoder implementer to be able to calculate required resources, e.g. mm2 chip area, it is important to have a similar limit. Counting the number of CTU's in an access unit provides a measure of size and rate without relying on a picture concept.

According to an optional feature of the invention, the shape of each patch is specified by a bounding box and/or a binary mask, wherein the binary mask defining the patch's shape at a coding tree unit (CTU) level, enabling efficient calculations on reference frames during encoding and decoding. The resolution of the shape can be at CTU level. For instance, a CTU may be 64 x 64 luma samples, and thus a patch would consist of multiple 64 x 64 blocks. There is the expectation for most patches, but not requirement in general, that the shape is connected. The combination of a bounding box and a binary mask is convenient in encoder/decoder context to perform calculations on reference frames.

According to an optional feature of the invention, the shape of each patch is specified at a sub-coding tree unit (sub-CTU) level, allowing for finer granularity to reduce coding overhead for blocks with a small number of useful samples, while increasing signaling to accommodate more detailed binary masks. The actual shape of a patch prior to coding depends on the application, and for large block sizes it can be that there are blocks for which only a small number of samples are useful. This creates coding overhead. By allowing for patches to be specified at a finer granularity, this loss can be reduced, but at the cost of additional signaling. Accordingly, there will be more and smaller CU's near object edges and the binary mask becomes bigger.

According to an optional feature of the invention, the binary mask is run-length encoded to efficiently represent the shape of patches composed of connected blocks, reducing signaling overhead in the bitstream. Since patches are expected to be composed of connected blocks, run-length encoding would be an efficient and simple method to code the binary mask.

According to an optional feature of the invention, the binary mask is quadtree encoded where, for instance, starting with a 64x64 block partition of the bounding box, blocks are recursively split into 4 blocks until reaching the smallest block size. At each split, the mask (1 or 0) is coded.

According to an optional feature of the invention, the quadtree decomposition of the patch aligns with the block decomposition that is used for motion prediction.

According to an optional feature of the invention, the block size of the patch shape is signaled, enabling a per-patch trade-off between fine-grained shape representation and signaling overhead.

According to an optional feature of the invention, a rectangular_patch_flag is signaled to indicate that a patch is rectangular, allowing the binary mask to be omitted to reduce signaling overhead and enabling the decoder to select a different render path for rectangular patches. With such a "rectangular_patch_flag" the signaling of the binary mask may be avoided, thus reducing signaling overhead. It may also be useful to have this information as an output of the decoder, because a different render path may be chosen for a rectangular patch vs. an arbitrarily shaped patch.

According to an optional feature of the invention, a patch window is provided with pixel or sub-block accuracy, enabling the encoder to focus on the image quality within the window and the decoder to reconstruct only the specified window, regardless of block alignment. The inventors are aware that it is unlikely that the uncoded size of a patch happens to be block-aligned. By providing a window on the patch, an encoder does not have to consider the image quality outside of the window, and a decoder only has to reconstruct the window.

According to an optional feature of the invention, the decoder output for a patch comprises a region in an image buffer and a description of the shape of the patch, enabling compatibility with legacy high-level APIs, including OpenGL.

According to an optional feature of the invention, the decoder output comprises a block-based image representation, such that memory consumption depends only on the number of blocks in a patch, improving memory coherence for two-dimensional access patterns typical of graphics applications, including GPU texture processing. In this way, the benefit is memory consumption only depends on the number of blocks in a patch, not on the shape of the patch. A block-based memory layout may improve memory coherence for 2-D access patterns as is typical for graphics applications. It is noted that GPU textures are also blocked-based, as opposed to the linear layout that is used for display buffers and raw video files.

According to an optional feature of the invention, the bounding box of a dependent patch has a position relative to a reference patch, the relative position being represented by two signed integers indicating the delta position for each reference, wherein the position is patch-relative and independent of the patch's location within a frame, with the position of an independent patch set to (0, 0) by default to reduce signaling overhead. As the shape of a patch changes over time, it may be useful to add coding units on any side of the patch. If only the size of a patch is signaled, then it is not possible to add coding units on the top or left side. The relative position can be provided by two signed integers per reference patch, indicating the delta position for each reference. Alternatively, all patches have a reference position, and the delta position is calculated by subtracting the position of the reference patch from the dependent patch. This position can be a patch-relative position and it does not have to be the position of the patch within a frame. The position of an independent patch can be set to be always (0, 0), thus avoiding the signaling of that information, and also making it clear that it is a patch-relative position.

According to an optional feature of the invention, the relative position of the bounding box of the dependent patch is selected such that the cost of motion vector coding for inter prediction is minimized.

According to an optional feature of the invention, the decoding of a patch is configured to depend on a patch in a previously decoded access unit, enabling temporal prediction of patches while avoiding crosstalk between patches, thereby improving the rate-distortion performance compared to frame-based video codecs utilizing video atlases. Since the invention proposes to code patches within a layer independent of each other, there is no risk of causing crosstalk, as when using video atlases in conventional solutions. Thus, the invention provides an improved rate-distortion characteristics for the coding of multiple patches per access unit, as when compared to using a frame-based video codec with video atlases, e.g. V3C and HEVC/VVC.

According to an optional feature of the invention, each patch includes a level of detail indication, wherein a level of detail *k* specifies that the nominal size of the patch is *2^{k}* larger than the coded size, and wherein the patch in a reference frame is scaled accordingly if the level of detail changes.

According to an optional feature of the invention, the inter-coding of a patch involves an affine reprojection of a reference patch, enabling more effective template matching for fast-moving image objects, and wherein block-level affine transformations are optionally disabled to achieve similar quality at reduced complexity. Albeit adding encoder/decoder complexity, the above-mentioned features enable template matching more effectively for fast moving image objects. When block-level affine transformations as available in VVC are disabled, then a similar quality can be achieved at a lower complexity.

According to an optional feature of the invention, the decoding of a patch in a dependent layer is configured to depend on a patch in a base layer, enabling the representation of the same scene element across multiple patches, such as for multi-camera views or different versions of the same image data, including advertisements or translated text. The inventors are incentivized by the fact that the same scene element may be represented by multiple patches, for instance when using multiple cameras or when having different versions of the same image data, such as when inserting ads or translating text to different languages.

According to an optional feature of the invention, the decoding of a patch in a dependent layer is configured to depend on a patch in a base layer, enabling the representation of the same scene element across multiple patches, such as for multi-camera views or different versions of the same image data, including advertisements or translated text.

According to an optional feature of the invention, a layer corresponds to a view, and inter-view prediction is performed between patches in different layers, enabling efficient coding of the same image region captured by multiple cameras. The inventors are aware that when multiple cameras capture the same image region, then inter-view prediction is a known effective technique, such as MVC, MV-HEVC and MV-VVC. Thus, the same principle can be applied to patches instead of pictures.

According to an optional feature of the invention, the layer is an enhancement layer, enabling multiple levels of detail for a patch to support graphics-like applications requiring scalable resolution or quality.

According to an optional feature of the invention, the decoder is configured to make a decision for each patch on whether to decode the enhancement layer, based on factors such as the rendering scale, the position of a virtual viewport, the resolution of a display device, or the size of an application window. When a user intends to render a patch at a smaller scale, the proposed solution of current invention may instruct a decoder to decode the patch at a lower level of detail. The scale at which a patch is rendered may for instance depend on the position of a virtual viewport, the resolution of a display device, or the size of an application window.

According to an optional feature of the invention, patches within the same layer of the same access unit are restricted from inter-prediction, enabling increased parallelization of encoding and decoding processes and improving patch-level sub-bitstream access efficiency. The inventors are aware that inter-patch prediction may not be expected to be efficient. By disallowing this, the encoder and decoder become more parallelizable and patch-level sub-bitstream access becomes more effective.

According to an optional feature of the invention, the patch metadata may include an indication of whether a patch can be used for intra-layer patch inter-prediction, ensuring that such a patch is retained even if it is not rendered, thereby improving rate-distortion characteristics in applications such as screen-content coding where multiple patches may share similar visual content, including text and graphics. The inventors notice that a patch cannot be discarded even when it will not be rendered. This is because another patch in the same layer may depend on it. The above-mentioned feature in current invention may result in improved rate-distortion characteristics in special applications such as screen-content coding whereby multiple patches representing different parts of a scene may still share similar visual content, such as text and graphics.

According to an optional feature of the invention, the shape of a patch is predicted from at least one reference patch, with the prediction reducing signaling overhead, and wherein multiple prediction modes are supported, including:
(a) skip mode for patches with the same shape as the reference patch;
(b) inter mode for patches with slightly different shapes;
(c) intra mode for patches with different shapes; and/or
(d) merge mode for patches referencing multiple reference frames.

According to an optional feature of the invention, each patch includes a view identifier (ID) that is output by the decoder, enabling the association of the patch with a specific view in multi-view video applications.

According to an optional feature of the invention, a patch can be predicted from a patch in a previously decoded access unit if the patches share the same view identifier (VID), enabling efficient inter-access unit prediction in multi-view video applications.

According to an optional feature of the invention, only an independent patch may include a view identifier (VID), and a dependent patch inherits the VID from its reference patch, reducing signaling overhead while maintaining view association.

According to an optional feature of the invention, the patch metadata may include an object instance identifier (OID) that is output by the decoder, the OID linking multiple patches representing the same scene object, enabling object-based operations such as rendering a subset of objects in a scene, and wherein the object instance ID is signaled in the slice segment header, an extension mechanism in the NAL unit, or as an SEI message. The inventors notice that a scene object that is partially occluded by other scene objects can be represented by multiple patches. Thus, an object instance ID links these patches together. This is useful for applications that perform object-based operations such as rendering only a subset of the objects in a scene. When a patch is an extension of a slice in HEVC/VVC, then the object instance ID may be part of the slice segment header RBSP or the extension mechanism in that NAL unit can be used.

According to an optional feature of the invention, the patch metadata may include an object category indication, enabling the classification of patches into categories representing similar objects within a scene, such as multiple instances of the same type of object, including cars or animals.

According to an optional feature of the invention, the video encoder is configured to receive image data outside of a patch boundary, enabling the extension of image texture beyond the patch boundary to reduce visible artifacts at patch edges in high quantization or low bitrate scenarios. The inventors are inspired by the fact that a video encoder with knowledge of the image data beyond patch boundaries is more capable of extending image texture beyond patch boundaries. The above-mentioned feature of current invention may avoid visible patch boundaries in high quantization (low bitrate) situations whereby a video encoder is not capable of representing all nuances of the image data in a patch.

According to an optional feature of the invention, the inpainting operation for extending image data beyond a patch boundary is parameterized, and at least one parameter is signaled in the bitstream, ensuring that the encoder and decoder share the same state for accurate predictor calculations. In this way, an encoder can calculate optimal parameters based on the provided image data outside of a patch boundary. It is preferable that both the encoder and the decoder share the same state.

According to an optional feature of the invention, the video codec is designed to support both 2D video and patch-based video coding, enabling compatibility with next-generation video codecs with capabilities beyond existing standard such as VVC.

According to an optional feature of the invention, the patch-based decoder is configured to transform a bitstream according to a specific standard or profile and pass the transformed bitstream to a legacy 2D video decoder, enabling compatibility with legacy codecs such as HEVC or VVC, while ensuring that the transformation adheres to the constraints of the legacy decoder, including maximum luma picture size. The inventors note that this invention may apply to a "bolt-on"/adapted codec for HEVC/VVC. This could be a new edition or extension of V3C. Currently, the standard V3C is video codec-agnostic, but that would be a codec-specific extension. A platform such as a mobile SoC may have support for a legacy codec such as HEVC or VVC but not for a patch-based video codec. In some embodiments of this invention a software decoder is capable of transforming a bitstream such that it can be decoded by the legacy video decoder. The decoder needs to be aware of the constraints of the legacy decoder, especially the maximum luma picture size. The idea of rewriting a bitstream is that the software decoder only must handle high-level syntax and the computationally expensive decoding processes can be handled by the legacy (hardware) decoder.

According to an optional feature of the invention, the decoder is configured to perform patch selection based on criteria such as patch priorities, view identifiers, or object identifiers, and organize the selected patches into a coded video atlas, enabling compatibility with the capabilities of a legacy video decoder by packing only a subset of the patches.

According to an optional feature of the invention, the frequency of encoded patches through the coded layers is dynamically adaptable based on the complexity of the image data, such as: (a) an increase in patch frequency results in smaller patches that may share a larger reference patch for predictions; and/or (b) a decrease in patch frequency allows larger patches to reference multiple smaller patches, wherein the encoder analyzes the image data to determine the optimal number, size, and frequency of patches to ensure efficient coding and high image quality. The encoder analyzes the image data complexity to determine the optimal number and size of patches and frequency through coded layers, ensuring efficient coding and high image quality. When the frequency (amount per layer/access unit) of patches increases over time the average size will decrease and multiple patches may use the same (bigger) reference patch for predictions. Visa versa, when the frequency (amount per layer/access unit) decreases then it will be beneficial if a (bigger) patch can have multiple (smaller) reference patches. As an example, when a patch represents a static person, when the person starts to move an arm, it can be beneficial to represent the arm as a separate patch, thus having now two patches instead of one for the same scene object.

According to an optional feature of the invention, the frequency of patches through the coded layers is dynamically adaptable based on the speed of an object in the scene, such that the encoder increases the number of patches for fast-moving objects to reduce motion estimation errors and crosstalk.

According to an optional feature of the invention, the frequency of patches through the coded layers is dynamically adaptable based on the requirements of the decoder, such that the encoder adjusts the number of patches to optimize decoding performance and minimize processing overhead while ensuring compatibility with the decoder's capabilities and limitations.

According to an optional feature of the invention, the frequency of patches through the coded layers is dynamically adjusted during encoding based on real-time feedback from the decoder, enabling adaptive optimization of patch placement and size to improve overall system performance.

According to an optional feature of the invention, each patch contains a metadata structure that includes essential data such as a patch identifier (ID), shape, size, and position, enabling each patch to be individually decoded and rendered without requiring additional information from other patches, thereby reducing signaling overhead.

According to an optional feature of the invention, a patch contains a metadata structure for a group of patches, the metadata including shared characteristics such as motion vectors, color profiles, or depth information, thereby reducing redundancy, minimizing the amount of data required for decoding, and improving coding efficiency.

According to an optional feature of the invention, a hierarchical metadata structure is implemented, wherein high-level metadata applies to larger regions or scenes, and lower-level metadata provides detailed information for individual patches, enabling scalable encoding and decoding while reducing overhead by prioritizing essential information at broader levels and detailed data only when necessary.

According to an optional feature of the invention, the hierarchical metadata may include spatial relationship data between patches, enabling rendering optimizations by providing information about the relative positions and alignments of patches within a scene.

According to an optional feature of the invention, the hierarchical metadata includes inter-frame dependency metadata at higher levels, enabling the maintenance of temporal consistency across frames for improved decoding and rendering performance.

According to an optional feature of the invention, the hierarchical metadata structure allows for adaptive reuse of metadata for similar scenes or objects across frames, reducing redundancy and improving coding efficiency.

According to an optional feature of the invention, a patch may be decomposed into one or more sub-patches, each sub-patch representing a distinct region with unique characteristics such as texture, color, or motion, enabling more granular processing and enhancing the accuracy of encoding and decoding. This enables the sub-patches to be processed independently, reducing inter-patch dependencies and improving overall system efficiency.

According to an optional feature of the invention, the decomposition of a patch into sub-patches is dynamically adjusted based on the complexity of the scene, such that regions with higher complexity are divided into smaller sub-patches, ensuring efficient resource allocation and prioritizing detailed processing where it is most needed.

According to an optional feature of the invention, a patch refers to a subject such as a person or object such as a car and contains sub-patches related to different modalities, such as: (a) video and audio; and/or (b) two or more healthcare imaging modalities, including ultrasound imaging, Magnetic Resonance Imaging (MRI), Computed Tomography (CT), or X-ray, enabling synchronized processing and representation of multimodal data.

According to an optional feature of the invention, the sub-patches for video coding may include metadata structures specific to video attributes, such as color profiles, motion vectors, and texture information, enabling efficient encoding and decoding of video data with detailed attribute representation.

According to an optional feature of the invention, the sub-patches for audio signal may include metadata structures specific to audio attributes, such as frequency spectra, amplitude variations, and temporal characteristics, enabling efficient encoding and decoding of audio data with detailed attribute representation.

According to an optional feature of the invention, the hierarchical structure of the patches and sub-patches facilitates the synchronization of different modalities, improving temporal consistency between video and audio components for enhanced multimodal representation.

According to an optional feature of the invention, the decomposition of a patch into sub-patches is dynamically adjusted based on the complexity of the scene, ensuring efficient allocation of resources by prioritizing detailed processing where needed for both video and audio modalities.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of a conventional video-based immersive video codec system;
FIG. 2 illustrates an example of conventional atlas-based immersive video coding scheme;
FIG. 3 illustrates an example of conventional view-synthesis based pixel pruning method;
FIG. 4 illustrates an example of conventional block diagram of a typical MIV encoder;
FIG. 5 illustrates an example of block diagram of an adapted codec system in accordance with some embodiments of the invention;
FIG. 6 illustrates an example of block diagram of full patch-based codec in accordance with some embodiments of the invention;
FIG. 7 illustrates an example of the structure of a coded patch in accordance with some embodiments of the invention;
FIG. 8 a flowchart of a method of encoding video data in accordance with some embodiments of the invention;
FIG. 9 is a block diagram of an encoder for video data in accordance with some embodiments of the invention;
FIG. 10 is a flowchart illustrating a method of decoding video data in accordance with some embodiments of the invention;
FIG. 11 is a block diagram of a decoder for video data in accordance with some embodiments of the invention.

### DETAILED DESCRIPTION OF THE EMBODIMENTS

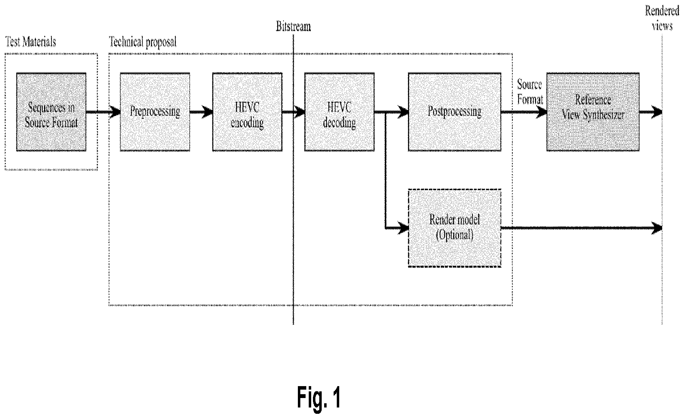

Fig. 1 illustrates conventional video-based immersive video codec system. The source data is available in multi-view plus depth video with camera parameters. A preprocessing is applied to generate video frames. The video frames are encoded using a video codec, in this case HEVC. Metadata on the video frames and cameras are also transmitted. At the time the assumption was that this information would be encapsulated in the HEVC bitstream, for instance using SEI messages. After HEVC decoding, the post-processor "unpacks" the decoded video frames to reconstruct the source views. Alternatively, a renderer can directly use the output of the HEVC decoder to render a synthetic view.

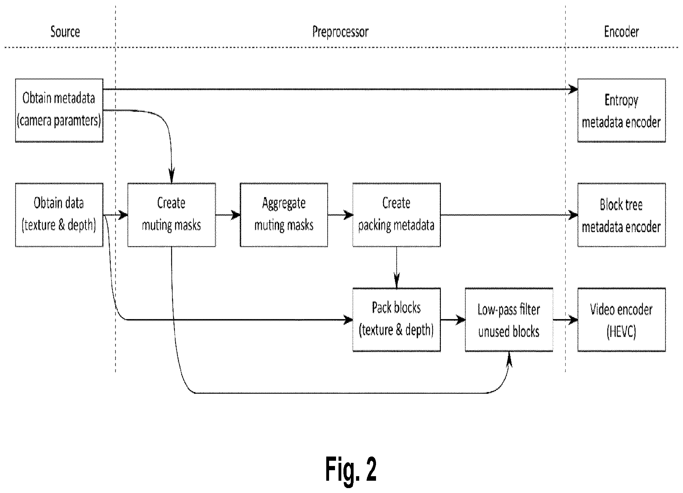

Fig. 2 illustrates a conventional atlas-based immersive video coding scheme. It involved creating muting masks (pruning pixels), aggregating those muting masks over time, creating packing metadata, using that metadata to pack the blocks into an atlas for texture and depth components. The unused blocks are low-pass filtered to make it easier for a legacy video codec to handle the video frames. This scheme is an example of a patch-based/atlas-based method whereby an existing video codec is (mis)used to pack multiple source views into an atlas.

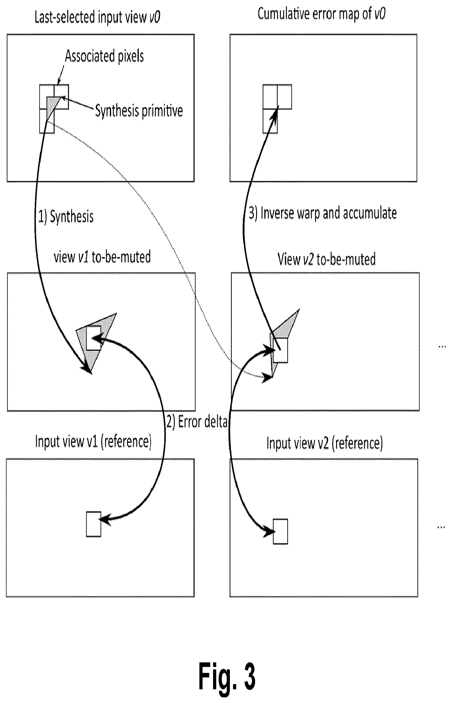

Fig. 3 illustrates a conventional view-synthesis based pixel pruning method in accordance with ISO/IEC JTC 1/SC 29/WG 04 N 0636 the test model for MPEG immersive video (TMIV) and publicly available software: gitlab.com/mpeg-i-visual/tmiv. The essence is that views are projected to other views to identify to what extent one source view can predict another source view. Parts that are predictable do not have to be coded, and thus those pixels are pruned.

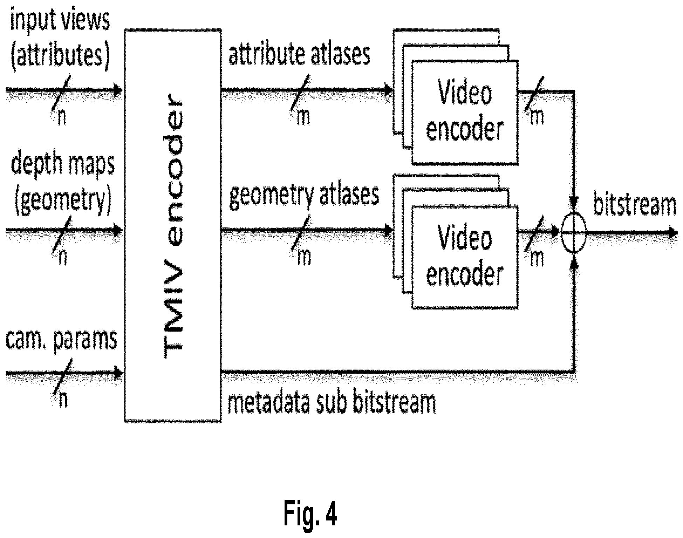

Fig. 4 illustrates a conventional block diagram of a typical ISO/IEC 23090-12 MPEG immersive video (MIV) encoder in accordance with the publication: the MPEG Immersive Video Standard- Current Status and Future Outlook, 10.1109/MMUL.2022.3175654. The MIV encoder processes multiple (n) input views, depth maps and camera parameter sets, and provide multiple (m) attribute and geometry atlas components, each of which are video sequences. Each video sequence is coded by a video encoder. The MIV encoder also outputs a metadata bitstream comprising patch parameters and view parameters. All bitstreams are multiplexed into a single bitstream. MIV and V-PCC share the bitstream format of ISO/IEC 23090-5 V3C.

The core realisation of this invention is that it is useful to take patches of source views to reduce pixel rate, but packing patches into atlases is cumbersome and is only needed for a standard that is video-codec agnostic. It is proposed in the current invention that the bitstream structure of a video codec can be generalized to directly support the coding of video patches.

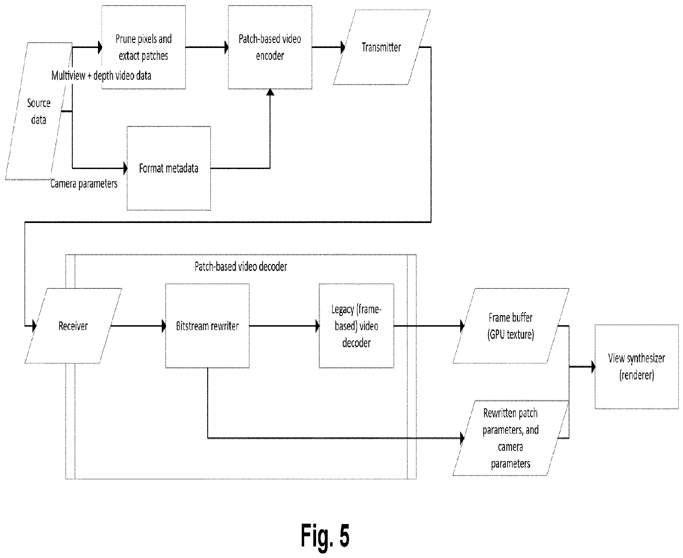

Fig. 5 illustrates a block diagram of a bolt-on/adapted codec system in accordance with some embodiments of the invention. The typical codec standard such as MIV or V3C has a bitstream structure that is partially based on an existing codec standard such as HEVC, VVC or AV1, such that a decoder is capable of rewriting that bitstream to pass it to a hardware video decoder of that specific standard. This new standard would be closely coupled to the video coding standard, so no longer video codec agnostic. As is shown, the bitstream is rewritten such that it can be decoded within the constraints of a legacy (frame-based) video decoder.

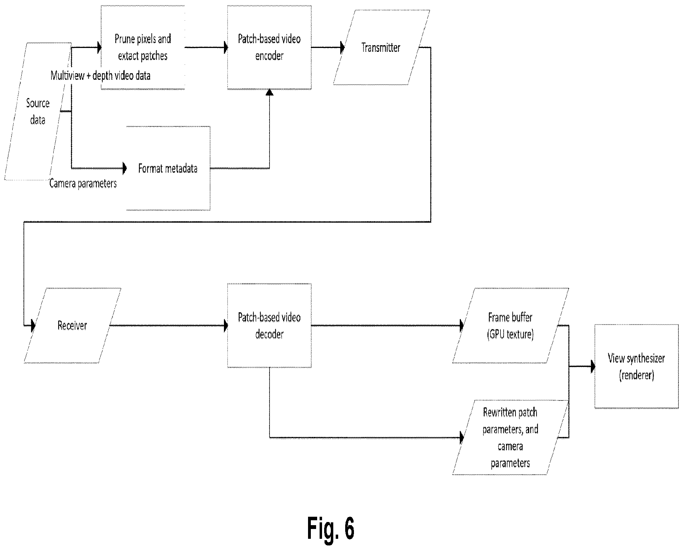

Fig. 6 illustrates a block diagram of a block diagram of full patch-based codec according to the invention.

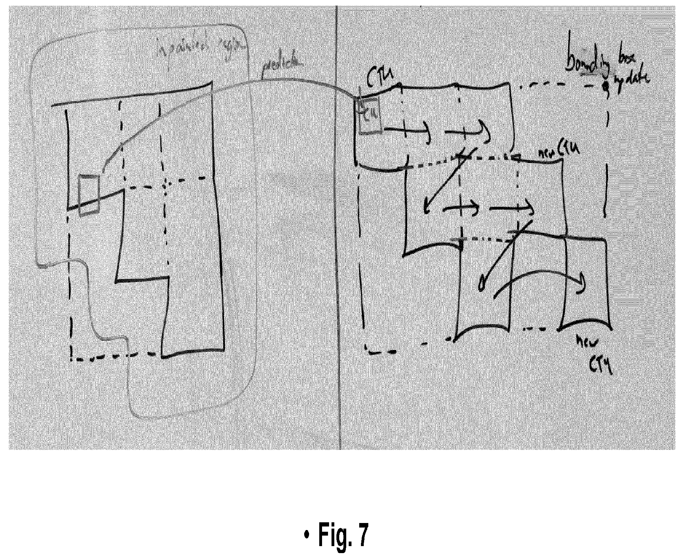

Fig. 7 illustrates the structure of a coded patch in accordance with the invention. In some embodiments of the invention, a patch is based on the slice concept. A slice is a set of CTU's with a traversal order. In the case of the invention a patch has its own coordinate system that is not tied to that of a frame. For instance, the top-left sample of the first CTU of an independently coded patch can, by definition, be at coordinate (0, 0) for all patches. One method to define the shape of a patch is by providing a bounding box and a binary mask. The traversal order can be by column and row, skipping over zero-values of the binary mask (the black marker as shown in Fig. 7). When a patch is inter-coded then a coordinate mapping is made between the reference patch and the dependent patch. It may be that a patch is extended to the left or to the top, such that some of the samples of the patch have negative coordinates. In some embodiments of the invention, a reference patch is transformed to make it more suitable for predictions. A region outside of the coded region of the patch can be inpainted (the blue marker as shown in Fig. 7) to make it possible to perform template matching for a block that is partially outside of the coded region of a patch (the red marker as shown in Fig. 7). Even more advanced, the reference patch may be remapped, for instance using an affine mapping, to match the global motion of a patch between frames.

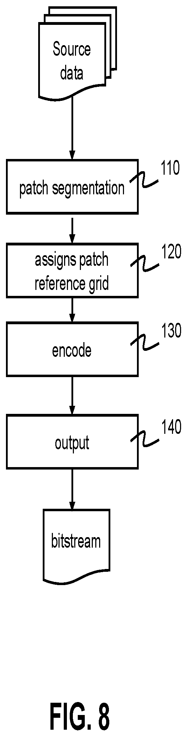

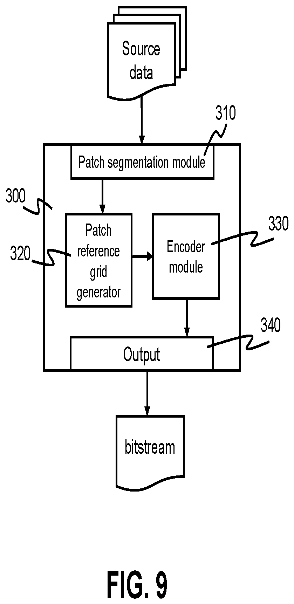

FIG. 8 illustrates an encoding method according to an embodiment of the present invention. FIG. 9 is a schematic block diagram of an encoder for carrying out the method of FIG. 8.

The apparatus for encoding video data 300 comprises a patch segmentation module 310; a patch reference grid generator 320; an encoder module 330; and an output 340. In step 110, the patch segmentation module 310 segments an input video image into a plurality of patches. Each patch is defined by patch metadata. In step 120, the patch reference grid generator 320 assigns each patch a patch reference grid within a coordinate system. The patch reference grid indicates a spatial reference for the patch independent of a fixed frame structure. In step 130, the encoder module 330 encodes each of the plurality of patches into a coded layer using the patch metadata and the patch reference grid. In step 140, the output 340 generates a bitstream comprising the coded layer. The bitstream includes the encoded patches and the associated patch metadata and the patch reference grid.

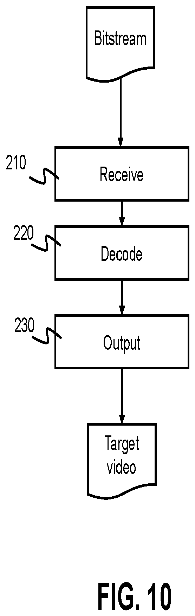

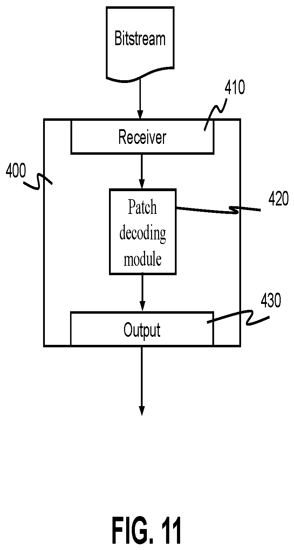

FIG. 10 illustrates an decoding method according to an embodiment of the present invention. FIG. 11 is a schematic block diagram of an decoder for carrying out the method of FIG. 10.

The apparatus for decoding video data 400 comprises a receiver 410, a patch decoding module 420, and an output 430. In step 210, the receiver 410 receives a coded layer comprising a plurality of encoded patches. Each encoded patch is associated with patch metadata and a patch reference grid defined within a coordinate system. In step 220, the patch decoding module 420 decodes each encoded patch based on the patch metadata and the patch reference grid to generate a corresponding decoded patch. In step 330, the output 430 generates target video data.

The encoding and decoding methods of FIGs. 8 and 10, and the encoder and decoder of FIGs. 9 and 11, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM. Various storage media may be fixed within a computing device or may be transportable, such that the one or more programs stored thereon can be loaded into a processor.

Metadata according to an embodiment may be stored on a storage medium. A bitstream according to an embodiment may be stored on the same storage medium or a different storage medium. The metadata may be embedded in the bitstream but this is not essential. Likewise, metadata and/or bitstreams (with the metadata in the bitstream or separate from it) may be transmitted as a signal modulated onto an electromagnetic carrier wave. The signal may be defined according to a standard for digital communications. The carrier wave may be an optical carrier, a radio-frequency wave, a millimeter wave, or a near field communications wave. It may be wired or wireless.

To the extent that an embodiment is implemented partly or wholly in hardware, the blocks shown in the block diagrams of Figs. 9 and 11 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An apparatus (300) for encoding video data, comprising:
a patch segmentation module (310) configured to segment an input video/image into a plurality of patches, each patch being defined by patch metadata;
a patch reference grid generator (320) configured to assign each patch a patch reference grid, wherein the patch reference grid determines a relation relative to an origin within a coordinate system; and
an encoder module (330) configured to encode the plurality of patches into a coded layer in which each patch is coded using the patch metadata and the patch reference grid.

2. The apparatus of claim 1, wherein the patch metadata comprises a patch identifier, and a binary mask and offset that specifies an arbitrary shape at a coded patch block level.

3. The apparatus of claim 2, wherein the binary mask is run-length encoded, and wherein the size of the binary mask and offset is signaled.

4. The apparatus of claim 2 or 3, wherein the binary mask is quadtree encoded.

5. The apparatus of any claims 2-4, wherein a patch window is provided with pixel (or sub-block) accuracy.

6. The apparatus of any claims 1-5, wherein the apparatus further comprises a motion estimation module configured to perform motion estimation between a current patch and one or more reference patches based on the coordinate system and the patch reference grid.

7. An apparatus (400) for decoding video data, comprising:
a receiver (410) configured to receive a coded layer comprising a plurality of encoded patches, each encoded patch being associated with patch metadata and a patch reference grid within a coordinate system; and
a patch decoding module (420) configured to decode each encoded patch based on the patch metadata and the patch reference grid.

8. The apparatus according to claim 7, wherein the patch metadata includes information defining the patch's shape, position, and wherein the information includes a patch identifier and a patch shape specification defined by a binary mask and offset at a predetermined coded patch block level.

9. The apparatus according to claim 7 or 8, wherein the patch decoding module is configured to transform a bitstream according to one standard/profile and transmit the transformed bitstream to a 2D video decoder.

10. The apparatus according to any of claims 1-9, wherein at least one patch comprises a metadata structure for a group of patches, where the group shares common characteristics such as motion vectors, color profiles, or depth information.

11. The apparatus according to any of claims 1-10, wherein at least one patch represents a subject or object, and wherein the at least one patch comprises sub-patches representing different modalities, for instance:
video and/or audio; and/or
two or more healthcare imaging modalities such as ultrasound imaging, Magnetic Resonance Imaging, Computed Tomography, X-ray.

12. The apparatus according to any of claims 1-11, wherein the patch reference grid generator is further configured to assign each patch a pixel coordinate system, wherein the pixel coordinate system is configured to assign pixel coordinate to each pixel within the patch.

13. A method for encoding video data, comprising:
segmenting (110) an input video image into a plurality of patches, each patch being defined by patch metadata;
assigning (120) each patch a patch reference grid within a coordinate system, wherein the patch reference grid indicates a spatial reference for the patch independent of a fixed frame structure;
encoding (130) each of the plurality of patches into a coded layer using the patch metadata and the patch reference grid; and
generating (140) a bitstream comprising the coded layer, wherein the bitstream includes the encoded patches and the associated patch metadata and the patch reference grid.

14. Amethod for decoding video data, comprising:
receiving (210) a coded layer comprising a plurality of encoded patches, each encoded patch being associated with patch metadata and a patch reference grid defined within a coordinate system, and
decoding (220) each encoded patch based on the patch metadata and the patch reference grid to generate a corresponding decoded patch.

15. A computer program product comprising computer program code means adapted to perform all the steps of the claims 13 or 14 when said program is run on a computer.
